**Europäisches Patentamt**

(19) **European Patent Office**

**Office européen des brevets**

(11) Veröffentlichungsnummer: **0 012 994**
**B1**

(12) **EUROPÄISCHE PATENTSCHRIFT**

(45) Veröffentlichungstag der Patentschrift:
01.12.82

(21) Anmeldenummer: **79105268.1**

(22) Anmeldetag: **19.12.79**

(51) Int. Cl.³: **C 11 D 7/44,** C 11 D 7/46

(54) Verwendung von wasserlöslichen Eiweissstoffen zum Reinigen von Nahrungs- und Futtermitteln.

(30) Priorität: **23.12.78 DE 2856086**

(43) Veröffentlichungstag der Anmeldung:
**09.07.80 Patentblatt 80/14**

(45) Bekanntmachung des Hinweises auf die Patenterteilung:
**01.12.82 Patentblatt 82/48**

(84) Benannte Vertragsstaaten:
**BE CH DE FR GB IT LU NL SE**

(56) Entgegenhaltungen:
**DE-A-2 745 371**
**US-A-1 975 962**
**US-A-3 113 104**

(73) Patentinhaber: **Henkel Kommanditgesellschaft auf Aktien, Postfach 1100 Henkelstrasse 67,
D-4000 Düsseldorf 1 (DE)**

(72) Erfinder: **Herbst, Sigurd, Dr., Auf der Driesch 14,
D-5000 Köln-Ostheim (DE)**
Erfinder: **Bietz, Rolf, Heideweg 21, D-4019 Monheim (DE)**

## Verwendung von wasserlöslichen Eiweissstoffen zum Reinigen von Nahrungs- und Futtermitteln

Aus der US-A-1 975 962 ist ein Verfahren zum Nachspülen von zuvor in sauren Reinigungsflotten gewaschenen Früchten, z.B. Äpfel, mit wässrigen kolloidalen Lösungen von Eiweissstoffen, insbesondere Kasein, bekannt. Mit dem Proteinzusatz zu der Nachspülflotte wird deren Oberflächenspannung gesenkt und damit der auf das Nachspülen folgende Trocknungsprozess verkürzt. Dieses Verfahren ist für Abpackbetriebe, in denen Früchte gereinigt, sortiert und verpackt werden, geeignet. Der proteinhaltigen Nachspülflotte können Alkalisalze, wie z.B. Natriumcarbonat, Natriumbicarbonat oder Trinatriumphosphat, zugesetzt werden, um die Dispergierung der Eiweissstoffe zu beschleunigen.

Gegenstand der Erfindung ist die Verwendung wässriger Lösungen oder Dispersionen von Eiweissstoffen zum Reinigen von Nahrungs- und Futtermitteln pflanzlicher oder tierischer Herkunft.

Die Anmelderin hat unter Bezugnahme auf die älteren Patentanmeldungen Nr. P 2 745 371.0 in der Bundesrepublik Deutschland, Nr. 190 949 (Publ. Nr. 871 061) in Belgien, Nr. 7 828 664 (Publ. Nr. 2 405 032) in Frankreich, Nr. 28404 A/78 in Italien, Nr. 7 809 480 in den Niederlanden und Nr. 10421/78 in der Schweiz gesonderte Patentansprüche für die hier genannten Vertragsstaaten vorgelegt.

Es wurde gefunden, dass man zur Reinigung von Nahrungs- und Futtermitteln nicht nur auf die Anwesenheit von Tensiden, sondern auch auf die Anwesenheit von wasserlöslichen synthetischen, organischen Polymeren verzichten kann, und dass man bei der Verwendung einzelner Eiweissstoffe sowie von Kombinationen von verschiedenen Eiweissstoffen überraschenderweise eine gute Reinigungswirkung erzielt. Der Vorteil der Reinigungsmittel der vorliegenden Erfindung besteht darin, dass sie praktisch vollständig aus Stoffen natürlicher Herkunft bestehen, was ihrem Einsatzgebiet entsprechend von besonderer Bedeutung ist. Darüber hinaus lassen sich wässrige, vorzugsweise wässrig-alkoholische Konzentrate der Eiweissstoffe mit einem hohen Wirksubstanzgehalt herstellen, was zu Produkten führt, die selbst bei tagelanger Lagerung bei 4 °C und Rückführung auf Raumtemperatur eine reversible Gelbildung aufweisen. Die Produkte können dadurch in vorteilhafter konzentrierter Form hergestellt und bei der Anwendung bis zum Verhältnis 1 : 500, vorzugsweise 1 : 100 bis 1 : 250 verdünnt werden.

Zum Erreichen des Reinigungseffektes sind Sequestriermittel nicht unbedingt erforderlich. Sie können allerdings die Lagerstabilität der Proteinlösungen günstig beeinflussen und werden daher in der Regel mitverwendet. Ebenso kann auch hier Zugabe von Konservierungsmitteln, Farb- und Geruchsstoffen zweckmässig sein.

Die Mittel werden als verdünnte wässrige Lösungen angewendet und eignen sich insbesondere zum Reinigen von pflanzlichen Produkten, wie Obst, Gemüse, Salat, Kartoffeln, Wurzelgemüsen, Rüben, Pilzen usw. Sie können aber auch zur Reinigung von tierischen Produkten, wie Fleisch, Fisch, Eiern, Käselaiben u. dgl., verwendet werden. Die Reinigung kann sowohl von Hand etwa durch Abwaschen oder Abbürsten, als auch maschinell erfolgen und im Haushalt, in Gaststätten, Grossküchen sowie Nahrungs- oder Futtermittel verarbeitenden Betrieben durchgeführt werden. Die den Nahrungs- und Futtermitteln üblicherweise anhaftenden Verschmutzungen, wie Erde, Rückstände von Dünger- oder Schädlingsbekämpfungsmitteln, tierische Schädlinge und durch diese hervorgerufene Verunreinigungen werden zuverlässig entfernt. Durch Nachspülen mit Wasser können die Reinigungsmittel leicht wieder ausgewaschen werden.

Im Sinne der Erfindung geeignete wasserlösliche oder in Wasser dispergierbare Eiweissstoffe (Proteine) werden aus tierischen oder pflanzlichen Produkten gewonnen, wie z.B. Albumin aus Rinderserum, Eialbumin, Natrium-Caseinat, Gelatine, Extrakte aus eiweisshaltigen Samen usw. Wegen der besseren Klarlöslichkeit in Wasser in Gegenwart von Salzen sind vor allem native Proteine besonders gut geeignet, was allerdings besondere Vorsichtsmassnahmen bei der Gewinnung und Weiterverarbeitung erfordert.

Von den aus pflanzlichen Rohstoffen gewonnenen Proteinen und Proteinhydrolysaten eignen sich vor allem pflanzliche Globuline, z.B. Legumin und Vicilin aus Erbsen, Glycinin aus Sojabohne oder Phaseolin aus Bohnen. Ihre Gewinnung erfolgt in bekannter Weise, z.B. durch Extraktion eiweisshaltiger Pflanzen bzw. deren Samen oder Knollen mit Salzlösungen oder Lösungen von schwachen Alkalien, wie z.B. Kochsalzlösung, Natriumsulfat, Natriumbromid, Natrium-Ethylendiamintetraacetat, Natrium-Nitrilotriacetat, Calciumhydroxid, Gemische aus Mono- und Dinatriumphosphat usw. Beispielsweise kann die Extraktion von zerkleinerten Erbsen oder entfetteten Sojabohnen mit etwa 10%iger Kochsalzlösung durchgeführt werden. Fetthaltige Pflanzenteile, insbesondere Samen, werden vor der Extraktion zweckmässig durch Behandeln mit organischen Lösungsmitteln entfettet. Alle Gewinnungsmassnahmen werden zweckmässig bei solchen Temperaturen durchgeführt, die unterhalb der Denaturierungstemperatur des betreffenden Eiweissstoffes liegen, d.h. vorzugsweise unterhalb 70 °C.

Tierische Proteine werden ebenfalls nach bekannten Verfahren gewonnen und sind z.T. handelsüblich. Sie werden z.T. bereits bei Temperaturen oberhalb 40 °C denaturiert.

Das Reinigungsmittelkonzentrat weist einen Gehalt von 0,1 bis 20, vorzugsweise 0,2 bis 10 Gew.-% an einzelnen Eiweissstoffen oder Gemischen aus Eiweissstoffen auf.

Als Sequestriermittel kommen die üblicherweise in Waschmitteln eingesetzten Hydroxycarbonsäuresalze, wie Citrate, Lactate, Tartra-

Aminocarbonsäuresalze, wie Ethylendiamintetraacetat, Nitrilotriacetat, sowie anorganische Salze, wie Phosphate und Polyphosphate, vorzugsweise als Natriumsalze, in Betracht. Sofern bei der Extraktion pflanzlicher Eiweissstoffe eines der vorgenannten Salze benutzt wurde, erübrigt sich eine Trennung von Salzlösung und Protein und ein gesonderter Zusatz an Sequestrierungsmitteln.

Der Gehalt des Reinigungsmittelkonzentrates an Sequestrierungsmitteln beträgt bis zu 15, vorzugsweise 3 bis 12 Gew.-%.

Schliesslich können die Reinigungsmittelgemische noch Konservierungsmittel, wie Salze der Sorbinsäure, Benzoesäure, Ameisensäure, Borsäure oder andere insbesondere für Lebensmittelzwecke zugelassene Konservierungsmittel in Mengen von 0,01 bis 1,0, vorzugsweise 0,05 bis 1 Gew.-%, gegebenenfalls zusammen mit für Lebensmittelzwecke zugelassenen Farb- und Geruchsstoffen enthalten. Der Gehalt an Konservierungsstoffen kann auch durch einen Gehalt an 5 bis 30, vorzugsweise 10 bis 20 Gew.-% Ethanol ersetzt werden, der zugleich als Lösungsmittel und natürlich konservierender Hilfsstoffe angesehen werden kann.

Die Reinigungsflotten werden normalerweise auf einen pH-Wert von 6 bis 8 eingestellt. Sie können jedoch in einem weiten pH-Bereich von 5 bis 10 angewendet werden.

## Beispiele

### Beispiel 1
3,0 kg Gelatinehydrolysat (MG ca. 10 000)
57,0 kg Natriumcitrat
0,1 kg eines Konservierungsmittels (Kathon 886®, ein Gemisch aus 5-Chlor-2-methyl-4-isothiazolin-3-on-magnesiumchlorid und 2-Methyl-4-isothiazolin-3-on-magnesiumchlorid der Firma Rohm and Haas Co.)
werden in 90 kg Wasser gelöst.

Dies klare, niedrigviskose Konzentrat dient nach Verdünnen mit Wasser im Verhältnis 1 : 100 als Reinigungsmittel.

### Beispiel 2
4,0 kg Gelatinehydrolysat (MG ca. 10 000)
4,0 kg Gelatine
10,0 kg Natriumcitrat
20,0 kg Ethanol
werden mit Wasser auf 100 kg aufgefüllt und der pH-Wert des Gemisches auf ca. 6 eingestellt.

Das klare Konzentrat dient nach Verdünnen mit Wasser im Verhältnis 1 : 250 als Reinigungsmittel.

### Beispiel 3
2,0 kg Gelatine
1,0 kg Natriumcaseinat
2,5 kg Natriumcitrat
0,1 kg Kathon 886
werden mit Wasser auf 100 kg aufgefüllt.

Das schwach getrübte, niedrigviskose Konzentrat dient nach Verdünnen mit Wasser im Verhältnis 1 : 100 als Reinigungsmittel.

### Beispiel 4
1,5 kg Natriumcaseinat
1,5 kg Sojaprotein
5,0 kg Natriumcitrat
werden mit Wasser auf 100 kg aufgefüllt.

Das schwach getrübte Konzentrat dient nach Verdünnen mit Wasser im Verhältnis 1 : 100 als Reinigungsmittel.

## Patentansprüche für die Vertragsstaaten:
## DE, BE, FR, IT, NL, CH.

1. Verwendung von wasserlöslichen oder in Wasser dispergierbaren Eiweissstoffen oder Eiweissstoffgemischen als Wirkstoffe natürlicher Herkunft in einem wässrigen Konzentrat mit einem Gehalt von 0,1–20 Gew.-% dieser Wirkstoffe zum Reinigen von Nahrungs- und Futtermitteln pflanzlicher oder tierischer Herkunft von üblicherweise anhaftenden Verschmutzungen, ohne die Mitverwendung von wasserlöslichen, synthetischen, organischen Polymeren.

2. Verwendung des wässrigen Konzentrates nach Anspruch 1 mit einem Gehalt an 0,2–10 Gew.-% an wasserlöslichen oder in Wasser dispergierbaren Eiweissstoffen oder Eiweissstoffgemischen.

3. Verwendung des wässrigen Konzentrates nach Ansprüchen 1 und 2, dadurch gekennzeichnet, dass in dem Konzentrat zusätzlich bis zu 15 Gew.-%, vorzugsweise 3–12 Gew.-%, Sequestriermittel vom Typ der Hydroxycarbonsäuresalze, Aminocarbonsäuresalze und der anorganischen Salze vom Typ der Phosphate und Polyphosphate, vorzugsweise in Form der Natriumsalze, vorhanden sind.

4. Verwendung des wässrigen Konzentrates nach Ansprüchen 1 bis 3, dadurch gekennzeichnet, dass in dem Konzentrat zusätzlich 0,01–1 Gew.-% an Salzen konservierend wirkender Säuren, insbesondere solche, die für Lebensmittel zugelassen sind, und gegebenenfalls Farb- und Duftstoffe vorhanden sind.

5. Verwendung des wässrigen Konzentrates nach Ansprüchen 1 bis 3, dadurch gekennzeichnet, dass als Konservierungsmittel Ethanol in Mengen von 5–30 Gew.-%, vorzugsweise 10–20 Gew.-%, vorhanden ist.

6. Verwendung des wässrigen Konzentrates nach Ansprüchen 1 bis 5, dadurch gekennzeichnet, dass es als Eiweissstoffe native Proteine enthält.

7. Verwendung des wässrigen Konzentrates nach Ansprüchen 1 bis 5, dadurch gekennzeichnet, dass es als Eiweissstoff Gelatine oder Gelatinehydrolysat oder deren Mischungen enthält.

8. Verwendung des wässrigen Konzentrates nach Ansprüchen 1 bis 7 in Verdünnung mit Wasser bis zum Verhältnis 1 : 500, vorzugsweise 1 : 100 bis 1 : 250.

**Patentansprüche für die Vertragsstaaten:**
**GB, SE, LU.**

1. Verwendung von wasserlöslichen oder in Wasser dispergierbaren Eiweissstoffen oder Eiweissstoffgemischen als Wirkstoffe natürlicher Herkunft in einem wässrigen Konzentrat mit einem Gehalt von 0,1–20 Gew.-% dieser Wirkstoffe zum Reinigen von Nahrungs- und Futtermitteln pflanzlicher oder tierischer Herkunft von üblicherweise anhaftenden Verschmutzungen.

2. Verwendung des wässrigen Konzentrates nach Anspruch 1 mit einem Gehalt an 0,2–10 Gew.-% an wasserlöslichen oder in Wasser dispergierbaren Eiweissstoffen oder Eiweissstoffgemischen.

3. Verwendung des wässrigen Konzentrates nach Ansprüchen 1 und 2, dadurch gekennzeichnet, dass in dem Konzentrat zusätzlich bis zu 15 Gew.-%, vorzugsweise 3–12 Gew.-%, Sequestriermittel vom Typ der Hydroxycarbonsäuresalze, Aminocarbonsäuresalze und der anorganischen Salze vom Typ der Phosphate und Polyphosphate, vorzugsweise in Form der Natriumsalze, vorhanden sind.

4. Verwendung des wässrigen Konzentrates nach Ansprüchen 1 bis 3, dadurch gekennzeichnet, dass in dem Konzentrat zusätzlich 0,01–1 Gew.-% an Salzen konservierend wirkender Säuren, insbesondere solcher, die für Lebensmittel zugelassen sind, und gegebenenfalls Farb- und Duftstoffe vorhanden sind.

5. Verwendung des wässrigen Konzentrates nach Ansprüchen 1 bis 3, dadurch gekennzeichnet, dass als Konservierungsmittel Ethanol in Mengen von 5–30 Gew.-%, vorzugsweise 10–20 Gew.-%, vorhanden ist.

6. Verwendung des wässrigen Konzentrates nach Ansprüchen 1 bis 5, dadurch gekennzeichnet, dass es als Eiweissstoffe native Proteine enthält.

7. Verwendung des wässrigen Konzentrates nach Ansprüchen 1 bis 5, dadurch gekennzeichnet, dass es als Eiweissstoff Gelatine oder Gelatinehydrolysat oder deren Mischungen enthält.

8. Verwendung des wässrigen Konzentrates nach Ansprüchen 1 bis 7 in Verdünnung mit Wasser bis zum Verhältnis 1 : 500, vorzugsweise 1 : 100 bis 1 : 250.

**Claims for the Contracting states:**
**DE, BE, FR, IT, NL, CH**

1. The use of water-soluble or water-dispersible proteins or protein mixtures as active substances of natural origin in an aqueous concentrate containing from 0.1 to 20% by weight of these active substances for cleaning foodstuffs and fodder of vegetable or animal origin to remove typically adhering contaminants without the use of water-soluble synthetic organic polymers.

2. The use of the aqueous concentrate as claimed in Claim 1 with a content of from 0.2 to 10% by weight of water-soluble or water-dispersible proteins or protein mixtures.

3. The use of the aqueous concentrate as claimed in Claims 1 and 2, characterised in that the concentrate additionally contains up to 15% by weight and preferably from 3 to 12% by weight of sequestrants of hydroxycarboxylic acid salts, aminocarboxylic acid salts and inorganic salts of the phosphate and polyphosphate type, preferably in the form of the sodium salts.

4. The use of the aqueous concentrate as claimed in Claims 1 to 3, characterised in that the concentrate additionally contains from 0.01 to 1% by weight of salts of acids having a preserving effect, particularly those permitted for use in foods, and optionally dyes and fragrances.

5. The use of the aqueous concentrate as claimed in Claims 1 to 3, characterised that ethanol is present as the preservative in quantities of from 5 to 30% by weight and preferably in quantities of from 10 to 20% by weight.

6. The use of the aqueous concentrate as claimed in Claims 1 to 5, characterised in that it contains native proteins as the proteins.

7. The use of the aqueous concentrate as claimed in Claims 1 to 5, characterised in that it contains gelatin or gelatin hydrolysate or mixture thereof as the protein.

8. The use of the aqueous concentrate as claimed in Claims 1 to 7 in dilution with water in a ratio of up to 1 : 500 and preferably in a ratio o from 1 : 100 to 1 : 250.

**Claims for the Contracting states:**
**GB, SE, LU**

1. The use of water-soluble or water-dispersible proteins or protein mixtures as active substances of natural origin in an aqueous concentrate containing from 0.1 to 20% by weight of these active substances for cleaning foodstuffs and fodder of vegetable or animal origin to remove typically adhering contaminants.

2. The use of the aqueous concentrate as claimed in Claim 1 with a content of from 0.2 to 10% by weight of water-soluble or water dispersible proteins or protein mixtures.

3. The use of the aqueous concentrate as claimed in Claims 1 and 2, characterised in that the concentrate additionally contains up to 15% by weight and preferably from 3 to 12% by weight of sequestrants of hydroxycarboxylic acid salts aminocarboxylic acid salts and inorganic salts of the phosphate and polyphosphate type, preferably in the form of the sodium salts.

4. The use of the aqueous concentrate as claimed in Claims 1 to 3, characterised in that the concentrate additionally contains from 0.01 to 1% by weight of salts of acids having a preserving effect, particularly those permitted for use in foods, and optionally dyes and fragrances.

5. The use of the aqueous concentrate as claimed in Claims 1 to 3, characterised in that ethanol is present as the preservative in quantities of from 5 to 30% by weight and preferably in quantities of from 10 to 20% by weight.

6. The use of the aqueous concentrate as claimed in Claims 1 to 5, characterised in that it contains native proteins as the proteins.

7. The use of the aqueous concentrate as claimed in Claims 1 to 5, characterised in that it contains gelatin or gelatin hydrolysate or mixture thereof as the protein.

8. The use of the aqueous concentrate as claimed in Claims 1 to 7 in dilution with water in a ratio of up to 1 : 500 and preferably in a ratio of from 1 : 100 to 1 : 250.

**Revendications pour les Etats contractants:**
**DE, BE, FR, IT, NL, CH**

1. Utilisation de matières protéiques ou de mélanges de matières protéiques solubles dans l'eau ou dispersibles dans l'eau en tant que matières actives d'origine naturelle dans un concentré aqueux ayant une teneur de 0,1–20% en poids de ces matières actives pour débarrasser les denrées alimentaires et aliments pour animaux d'origine végétale ou animale des saletés qui adhèrent ordinairement, sans l'utilisation conjointe de polymères organiques synthétiques solubles dans l'eau.

2. Utilisation du concentré aqueux selon la revendication 1 ayant une teneur de 0,2 à 10% en poids en matières albuminoïdes ou mélanges de matières albuminoïdes solubles dans l'eau ou dispersibles dans l'eau.

3. Utilisation du concentré aqueux selon les revendications 1 et 2, caractérisée en ce que sont présents dans le concentré en supplément jusqu'à 15% en poids, de préférence 3 à 12% en poids de séquestrants du type des sels d'acides hydroxycarboxyliques, des sels d'acides aminocarboxyliques et des sels minéraux du type des phosphates et polyphosphates, de préférence sous forme des sels de sodium.

4. Utilisation du concentré aqueux selon les revendications 1 à 3, caractérisée en ce que sont présents supplémentairement dans le concentré 0,01–1% en poids de sels d'acides à activité conservatrice, en particulier de ceux qui sont admis pour les denrées alimentaires, de même qu'éventuellement des colorants et des aromatisants.

5. Utilisation du concentré aqueux selon les revendications 1 à 3, caractérisée en ce qu'en tant qu'agent de conservation est présent de l'éthanol en des quantités de 5 à 30% en poids, de préférence de 10 à 20% en poids.

6. Utilisation du concentré aqueux selon les revendications 1 à 5, caractérisée en ce qu'il contient comme matières albuminoïdes des protéines naturelles.

7. Utilisation du concentré aqueux selon les revendications 1 à 5, caractérisée en ce qu'il contient comme matière albuminoïde de la gélatine ou un hydrolysat de gélatine ou leurs mélanges.

8. Utilisation du concentré aqueux selon les revendications 1 à 7 en dilution avec de l'eau jusqu'à un rapport de 1 : 500, de préférence de 1 : 100 à 1 : 250.

**Revendications pour les Etats contractants:**
**GB, SE, LU**

1. Utilisation de matières protéiques ou de mélanges de matières protéiques solubles dans l'eau ou dispersibles dans l'eau en tant que matières actives d'origine naturelle dans un concentré aqueux ayant une teneur de 0,1–20% en poids de ces matières actives pour débarrasser les denrées alimentaires et aliments pour animaux d'origine végétale ou animale des saletés qui adhèrent ordinairement.

2. Utilisation du concentré aqueux selon la revendication 1 ayant une teneur de 0,2 à 10% en poids en matières albuminoïdes ou mélanges de matières albuminoïdes solubles dans l'eau ou dispersibles dans l'eau.

3. Utilisation du concentré aqueux selon les revendications 1 et 2, caractérisée en ce que sont présents dans le concentré en supplément jusqu'à 15% en poids, de préférence 3 à 12% en poids de séquestrants du type des sels d'acides hydroxycarboxyliques, des sels d'acides aminocarboxyliques et des sels minéraux du type des phosphates et polyphosphates, de préférence sous forme des sels de sodium.

4. Utilisation du concentré aqueux selon les revendications 1 à 3, caractérisée en ce que sont présents supplémentairement dans le concentré 0,01–1% en poids de sels d'acides à activité conservatrice, en particulier de ceux qui sont admis pour les denrées alimentaires, de même qu'éventuellement des colorants et des aromatisants.

5. Utilisation du concentré aqueux selon les revendications 1 à 3, caractérisée en ce qu'en tant qu'agent de conservation est présent de l'éthanol en des quantités de 5 à 30% en poids, de préférence de 10 à 20% en poids.

6. Utilisation du concentré aqueux selon les revendications 1 à 5, caractérisée en ce qu'il contient comme matières albuminoïdes des protéines naturelles.

7. Utilisation du concentré aqueux selon les revendications 1 à 5, caractérisée en ce qu'il contient comme matière albuminoïde de la gélatine ou un hydrolysat de gélatine ou leurs mélanges.

8. Utilisation du concentré aqueux selon les revendications 1 à 7 en dilution avec de l'eau jusqu'à un rapport de 1 : 500, de préférence de 1 : 100 à 1 : 250.